# EUROPÄISCHE PATENTSCHRIFT

(11) **EP 1 475 183 B1**
(45) Veröffentlichungstag und Bekanntmachung des Hinweises auf die Patenterteilung: **23.11.2005**
(21) Anmeldenummer: 04009631.5
(22) Anmeldetag: 23.04.2004
(51) Int. Cl.: B23Q 1/58, B23Q 5/38, B23Q 1/28

(54) **Verstelleinrichtung mit einem auf einem Schlitten integrierten Elektromotor und einer Feststellvorrichtung**
Linear actuator with an electric drive and a position locking device mounted on a slide
Actionneur linéaire avec un moteur électrique et un système de blocage montés sur un chariot

(30) Priorität: 07.05.2003 DE 10320271
(43) Veröffentlichungstag der Anmeldung: 10.11.2004
(73) Patentinhaber: SICK STEGMANN GmbH, 78166 Donaueschingen (DE)
(72) Erfinder: Siraky, Josef, 78166 Donaueschingen (DE); Maier, Josef, 78176 Blumberg (DE); Roming, Wilfried, 78713 Schramberg (DE)
(74) Vertreter: Ludewigt, Christoph

(56) Entgegenhaltungen:
- EP-A- 1 355 074
- DE-A- 19 500 480
- GB-A- 2 142 410
- GB-A- 2 183 781

## Beschreibung

Die Erfindung betrifft eine Verstelleinrichtung gemäß dem Oberbegriff des Anspruchs 1.

Derartige Verstelleinrichtungen sind aus der Maschinenbauindustrie bekannt und werden beispielsweise bei Verpackungsmaschinen eingesetzt, um z.B. die Maschine umstellen zu können von einer Verpackungsgröße auf eine andere. Dabei werden über die Verstelleinrichtung beispielsweise Anschläge oder sonstige Maschinenteile verstellt und entsprechend der neuen Aufgabe neu positioniert.

Bei diesen bekannten Verstelleinrichtungen wird die Verstellung entweder von Hand mittels eines Werkzeuges oder auch motorgetrieben vorgenommen. Zusätzlich ist eine Sperreinrichtung vorgesehen, um den eingestellten Schlitten der Verstelleinrichtung in seiner neuen Position zu fixieren. Diese Sperreinrichtung besteht in der Regel aus einer Feststellschraube oder dergleichen. Um die gewünschten einzustellenden Positionen ohne größere Justagen einstellen zu können, sind an den Verstelleinrichtungen Zählwerke vorgesehen, die beispielsweise die Umdrehungen einer Spindel der Verstelleinrichtung zählen.

Aus der GB 2 142 410 A ist eine Verstelleinrichtung gemäß dem Oberbegriff des Anspruchs 1 bekannt.

Ausgehend von diesem Stand der Technik ist es Aufgabe der Erfindung eine verbesserte Verstelleinrichtung bereitzustellen, die kompakter aufgebaut ist und ein einfacheres und genaueres Verstellen ohne zusätzliche Handgriffe ermöglicht.

Diese Aufgabe wird gelöst durch eine Vorrichtung mit den Merkmalen des Anspruchs 1.

Erfindungsgemäß weist die Verstelleinrichtung mit einem Schlitten, mit wenigstens einem Führungselement auf dem der Schlitten verschiebbar gelagert ist, mit einer Verschiebevorrichung zum Verschieben des Schlittens und mit einer Feststellvorrichtung zum Feststellen des in eine gewünschte Position verschobenen Schlittens einen elektrischen Antrieb für die Verstelleinrichtung auf, wobei der Antrieb in dem Schlitten integriert ist und die Feststellvorrichtung Feststellmittel aufweist, die bei Stillstand des Motors ein Verschieben des Schlittens blockieren und sich bei Anlauf des Motors selbsttätig lösen. Die Feststellmittel umfassen ein Schneckenrad eines antreibenden Getriebes, wobei das Schneckenrad zum Verschieben des Schlittens in eine in dem Führungselement vorgesehene Zahnreihe eingreift. Weiter weist das Feststellmittel ein Spannelement auf, mit dem das Schneckenrad gegen die Zahnreihe verspannt lagerbar ist, und es ist ein Lösemittel vorgesehen, mit dem die auf dem Schneckenrad liegende Spannkraft bei Betrieb des Motors selbsttätig gegen die Spannkraft des Spannelements lösbar ist.

Der wesentliche Vorteil besteht darin, dass keine separate Feststellvorrichtung notwendig ist und betätigt werden müsste, denn die erfindungsgemäße Verstelleinrichtung blockiert sich bei Motorstillstand selbsttätig und löst sich bei Anlauf des Motors selbsttätig. Dadurch können Handgriffe und damit Zeit beim Umstellen der Maschine gespart werden.

Ein weiterer Vorteil besteht in der Integration des Motors in den Schlitten, denn dadurch kann erheblich Bauraum eingespart werden, was bei den heutigen Maschinen, die immer kompakter werden, von großem Vorteil ist. Auch die erfindungsgemäße Ausbildung der Feststellvorrichtung trägt zur Bauraumersparnis erheblich bei.

Desweiteren kann aufgrund der Integration des Motors in den Schlitten eine ansonsten notwendige Spindel oder dergleichen Gegenstand zum Verstellen entfallen.

Da die Feststellvorrichtung ein Feststellmittel aufweist und das Feststellmittel ein Schneckenrad eines antreibenden Getriebes umfasst kann die Eigenschaft der Selbsthemmung ausgenutzt werden. Ausserdem sind Schneckengetriebe spiel- und geräuscharm.

Da weiter das Führungselement, beispielsweise eine Führungsstange, eine Zahnreihe aufweist, in die das Schneckenrad zum Verschieben des Schlittens eingreift, kann die Führungsstange sowohl zur Führung als auch zum Vortrieb des Schlittens genutzt werden.

Damit in der Feststellvorrichtung zusätzlich zur Selbsthemmung des Schneckenrades die Hemmung unterstützt wird, ist vorgesehen, dass das Feststellmittel ein Spannelement aufweist, mit dem das Schneckenrad gegen die Zahnreihe verspannt lagerbar ist.

Um die Feststellvorrichtung zu lösen, ist ein Lösemittel vorgesehen, mit dem die auf dem Schneckenrad liegende Spannkraft bei Betrieb des Motors selbsttätig gegen die Spannkraft des Spannelements lösbar ist. Damit ist in einfachster Weise die Blockierung des Schlittens lösbar.

In einfacher konstruktiver Ausführung ist das Spannmittel eine Blattfeder, die auf eine Achse des Schneckenrades einwirkt und das Schneckenrad auf die Zahnreihe drückt.

Wenn das Lösemittel ein mit dem Gehäuse des Motors verbundener Führungshebel ist, der abhängig von der Winkelstellung des Motorgehäuses die Position des Schneckenrades führt, kann eine Drehbewegung des Motors selbst ausgenutzt werden, um die Feststellvorrichtung zu lösen. Eine Drehbewegung ergibt sich immer daraus, dass der Motor ein gewisses Drehmoment aufbringen muss.

Vorteilhafterweise ist der Führungshebel symmetrisch ausgebildet, so dass ein Lösen der Feststellvorrichtung sowohl bei Links- als auch bei Rechtslauf des Motors erfolgt.

Wenn die Verschiebevorrichtung mit dem Motor einen Drehgeber, vorzugsweise einen Multiturn-Drehgeber, aufweist, kann die Position des Schlittens exakt bestimmt werden und über Signale ausgegeben werden. Die Positionssignale können einer Steuerung zugeführt werden, die ein automatisches Verstellen ohne jegliche Handgriffe ermöglicht.

Dazu sind mit dem Drehgeber die Winkelstellung und/oder Umdrehungen wenigstens eines angetriebenen Getriebeelements, vorzugsweise des Schneckenrades, ermittelbar.

Über eine Schnittstelle können die Positionssignale der Steuerung zugeführt werden, die eine Verstellung automatisch durchführen kann. Die Positionsdaten können beispielsweise in die Steuerung einprogrammierbar sein oder über Speichermedien eingebbar sein. Eine Verstellung einer kompletten Maschine, z.B. einer Verpackungsmaschine, kann dann nur wenige Minuten beanspruchen, wofür bisher eine halbe bis eine ganze Stunde notwendig war.

Zur Erhöhung der Stabibltät können als Führungselemente zwei Führungsstangen vorgesehen sein. Der Motor ist mittig in dem Schlitten angeordnet und treibt über das Getriebe zwei Schneckenräder, die zum Verschieben jeweils in eine Zahnreihe der Führungsstangen eingreifen.

In dieser Ausgestaltung kann es zur Erhöhung der Feststellkraft sinnvoll sein, dass an beiden Schneckenrädern Feststell- und Lösemittel vorgesehen sind.

Um für den Fall eines Ausfalls der Steuerung ein Verstellung vornehmen zu können, weist die Verstelleinrichtung manuell betätigbare Bedienelemente zum Schalten des Motors auf, beispielsweise Start- und Stop-Bedienelemente für Links- und Rechtslauf.

Um selbst bei kompletten Stromausfall ein Verstellen zu ermöglichen, ist ein Anschluss für ein Werkzeug, wie z.B. Innensechskantschlüssel, vorgesehen, um damit die Verschiebevorrichtung manuell zu betätigen.

Im Folgenden wir die Erfindung unter Bezugnahme auf die Zeichnung anhand eines Ausführungsbeispiels im Einzelnen erläutert. In der Zeichnung zeigen:

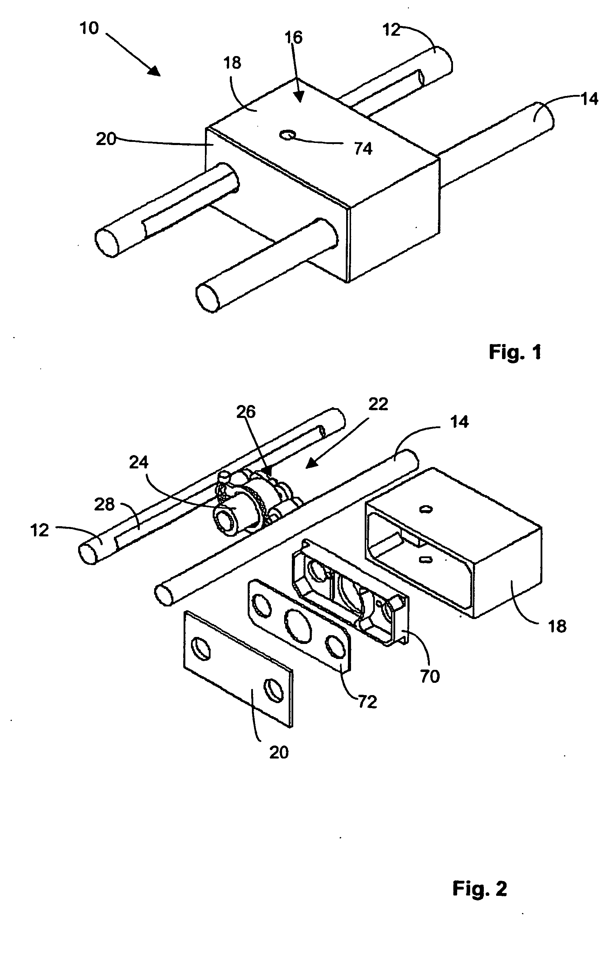

- Fig. 1: eine Ansicht einer erfindungsgemäßen Verstelleinrichtung;
- Fig. 2: eine Ansicht der Verstelleinrichtung aus Fig. 1 mit Gehäusebestandteilen separat dargestellt;
- Fig: 3: eine Verschiebevorrichtung der Verstelleinrichtung aus Fig. 1;

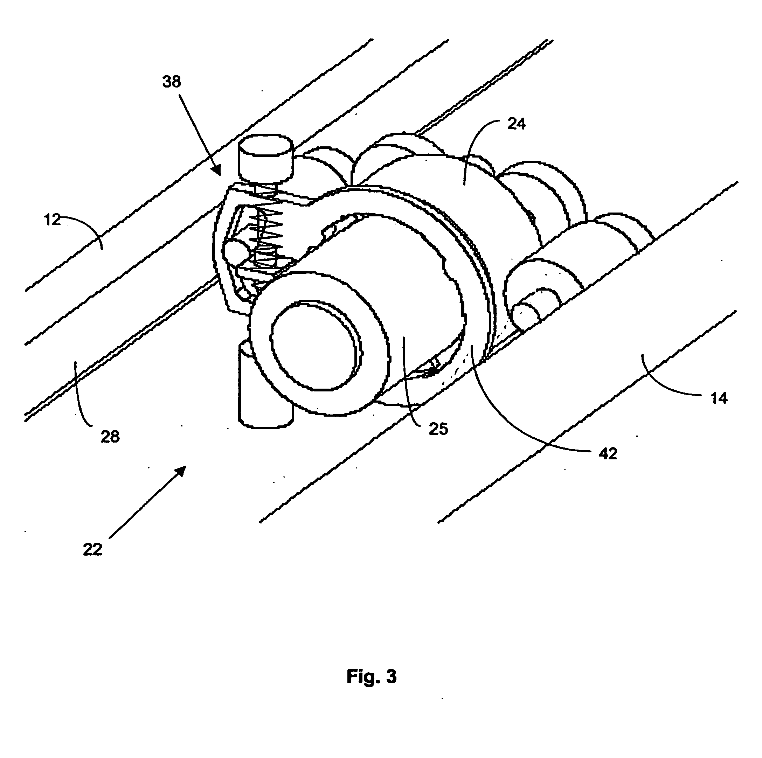

- Fig. 4 und 5: Stirnansichten der Verschiebevorrichtung aus Fig. 3;

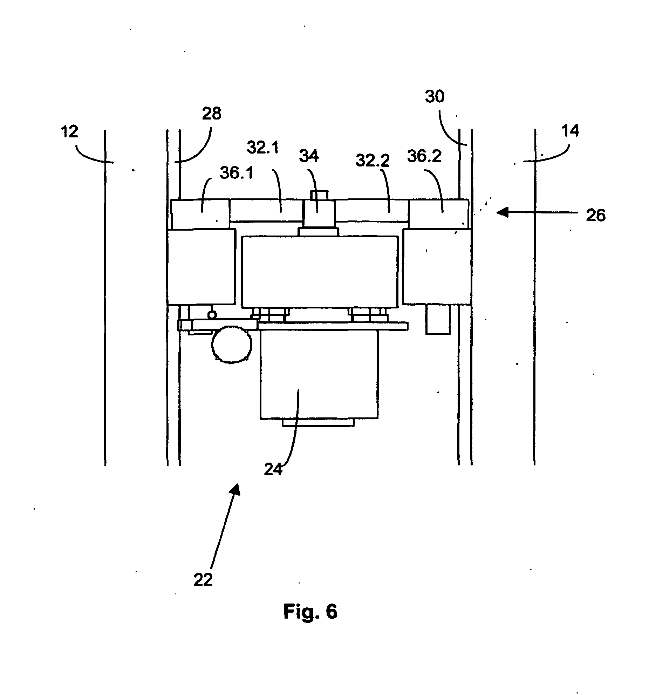

- Fig. 6: eine Draufsicht der Verschiebevorrichtung aus Fig. 3;
- Fig. 7: die Verschiebevorrichtung aus Fig. 3 mit einigen Teilen in Explosionsdarstellung;
- Fig. 8: eine Stirnansicht wie Fig. 4, wobei nur der zu einer Feststellvorrichtung gehörende Teil der Komponenten dargestellt ist.

Eine in der Zeichnung dargestellte Verstelleinrichtung 10 weist einen auf zwei Führungselementen 12 und 14 verschiebbar gelagerten Schlitten 16 auf. Die Führungselemente 12 und 14 sind als Führungsstangen ausgebildet. Der Führungsschlitten umfasst ein Gehäuse 18 mit Gehäusedeckel 20, die von den Führungsstangen 12 und 14 durchsetzt sind.

In dem Gehäuse ist eine Verschiebevorrichtung 22 angeordnet, mittels derer der Schlitten 16 auf den Führungsstangen 12 und 14 verschoben werden kann. Die Verschiebeeinrichtung 22 weist zum Antrieb einen Elektromotor 24 mit einem Getriebe 26 auf. Das Getriebe 26 ist symmetrisch ausgebildet und greift beidseitig in je eine Zahnreihe 28 bzw. 30 ein, die jeweils in einer der Führungsstangen 12 bzw. 14 vorgesehen sind. Jede der beiden Seiten des Getriebes 26 besteht aus einem ersten Zahnrad 32.1 bzw. 32.2, die von einem Antriebsritzel 34 getrieben werden. Das erste Zahnrad 32.1 bzw. 32.2 treibt ein Schneckenrad 36.1 bzw. 36.2, das wiederum mit seiner Schnecke in die jeweilige Zahnreihe 28 bzw. 30 eingreift, so dass über den Motor 24, das Antriebsritzel 34, die ersten Zahnräder 32.1 und 32.2 und die Schneckenräder 36.1 und 36.2 je nach Umdrehungsrichtung des Motors 24 ein Vor- oder Rücktrieb des Schlittens 16 entlang der Führungsstangen 12 und 14 bewirkt wird.

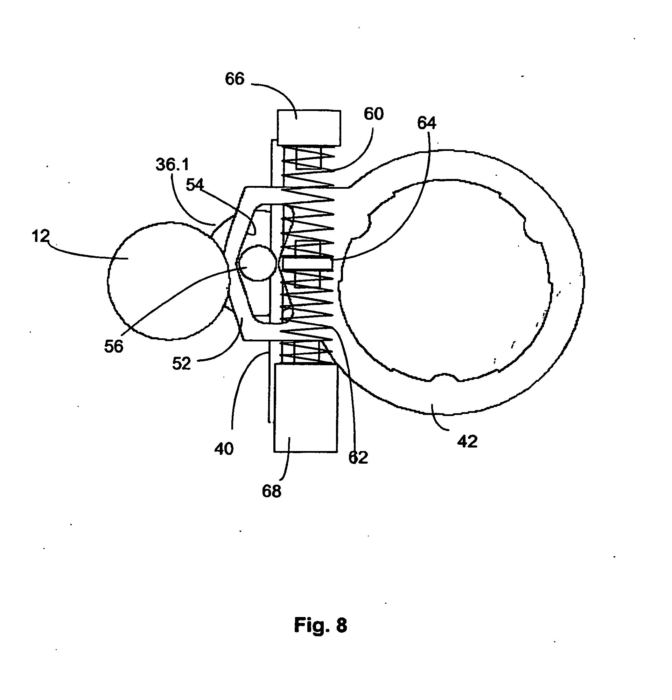

Die erfindungsgemäße Verstelleinrichtung 10 weist weiter eine Feststellvorrichtung 38 auf, wie sie in Fig. 8 dargestellt ist. Die Feststellvorrichtung 38 umfasst eine Blattfeder 40, einen Führungshebel 42 und erste und zweite Rückstellfedern 44 und 46. Die Blattfeder 40 dient als Spannmittel um das Schneckenrad 36.1 gegen die Zahnreihe 28 der Führungsstange 12 zu drücken. Dadurch bildet die Blattfeder 40 zusammen mit dem Schneckenrad 36.1 ein Feststellmittel, mit dem die Selbsthemmung zwischen Schneckenrad 36.1 und Zahnreihe 28 verstärkt wird und eine Blockierung des Schlittens 16 erfolgt.

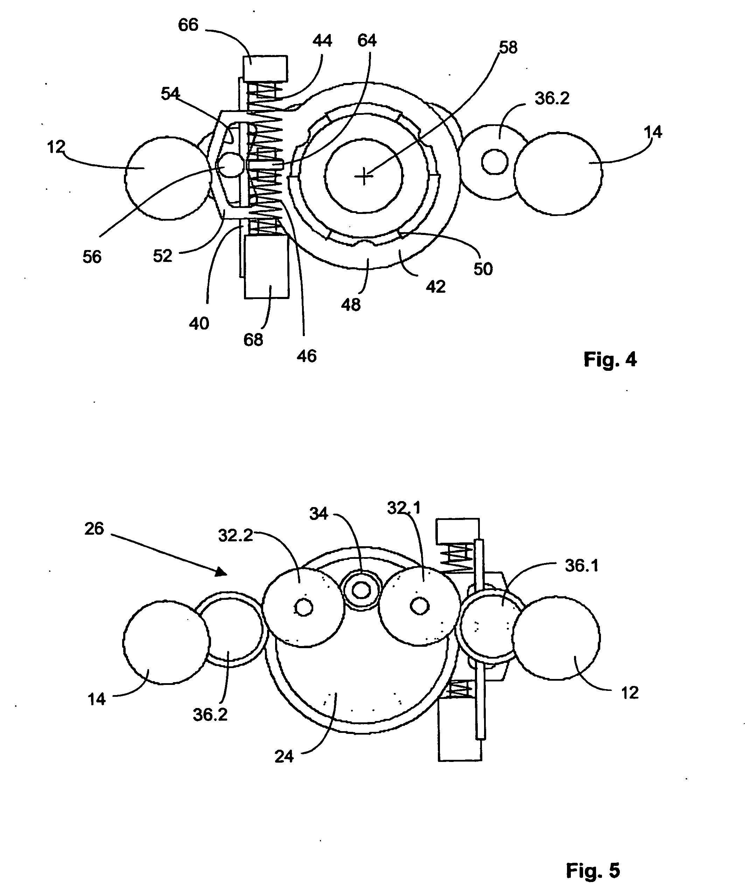

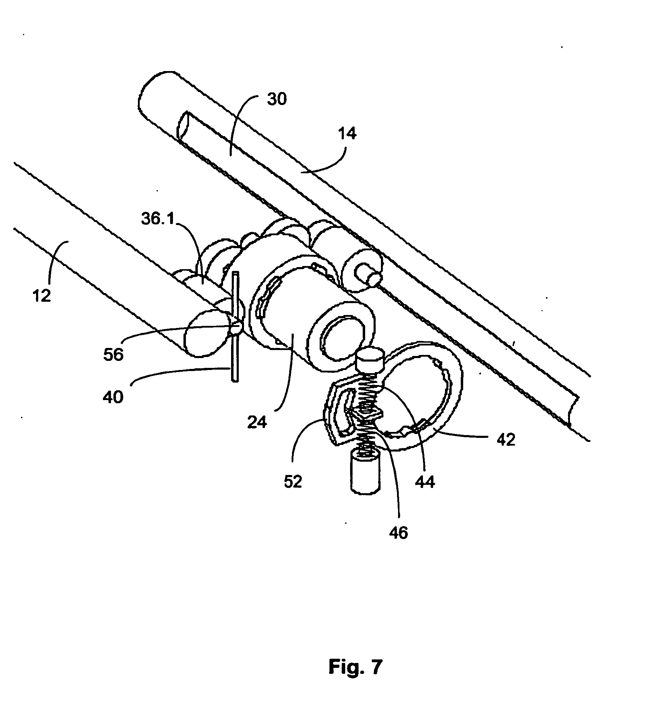

Dies gilt solange der Motor 24 im Stillstand ist. Dann befindet sich der Führungshebel 42 in einer in Fig. 4 und 8 dargestellten mittigen Ruhestellung. Der Führungshebel 42 hat eine in Fig. 4 und 8 erkennbare Gestaltung und weist einen Ringabschnitt 48 auf, mit dem der Führeungshebel 42 über ein Motorgehäuse 25 des Motors 24 gestülpt ist und auf diesem aufsitzt (Fig. 4). Damit der Führungshebel verdrehfest mit dem Motorgehäuse 25 verbunden ist, weisen der Ringabschnitt 48 und das Motorgehäuse 25 korrespondierende Verdrehsicherungen 50 (Fig. 4) in Form von Erhebungen und Vertiefungen auf (Fig. 7).

An den Ringabschnitt 48 schließt sich ein Führungsabschnitt 52 an, der eine Führungsnut 54 aufweist. In der Führungsnut 54 ist eine Schneckenradwelle 56 des Schneckenrades 36.1 gehalten. Wenn der Motor 24 zu laufen beginnt, wird sich das Motorgehäuse 25 um einen Winkel um seine Drehachse 58 verdrehen, aufgrund eines gewissen Drehmomentes, dass der Motor 24 aufbringen muß, um das Getriebe 26 zu treiben. Das Motorgehäuse 25 ist drehbar in dem Gehäuse 18 gelagert. Wenn das Motorgehäuse 25 sich verdreht, verdreht sich der Führungshebel 42 in gleichem Maße. Da die Schneckenradwelle 56 in der Führungsnut 54 geführt ist und die Führungsnut 54 derart geformt ist (Fig. 4 und 8), dass bei Verdrehen des Führungshebels 42 um die Drehachse 58 das Schneckenrad 36.1 von der Zahnreihe 28 wegbewegt wird, wird beim Anlaufen des Motors 24 das Schneckenrad 36.1 gegen die Spannkraft der Blattfeder 40 derart gelöst, dass die Blockierung des Schlittens 16 dadurch selbsttätig gelöst wird. Das Schneckenrad 36.1 wird dabei selbstverständlich nur soweit von der Zahnreihe 28 wegbewegt, dass die Schnecke des Schneckenrades 36.1 stets in Eingriff mit den Zähnen der Zahnreihe 28 bleibt. Der Führungshebel 42 mit der Führungsnut 54 ist entsprechend dimensioniert. Die Führungsnut 54 ist symmetrisch zur Ruheposition (Fig. 4 und 8) ausgebildet, so dass sowohl bei Linkslauf als auch bei Rechtslauf des Motors 24 der gleiche Lösemechanismus wirkt.

Damit bei Stillstand des Motors 24 der Führungshebel 42 in der in Fig. 4 und 8 dargestellte Ruheposition gehalten ist und somit das Schneckenrad 36.1 über die Blattfeder 40 verspannt gehalten ist zur Blockierung des Schlittens, sind eine erste und eine zweite Federn 44 und 46 vorgesehen, die zusammen den Führungshebel 42 in seiner Ruheposition vorgespannt halten. Dazu stützen die Federn 44 und 46 sich einerseits an einem Ansatz 64 an dem Führungshebel 42 und andererseits an jeweils einem Anschlag 66 bzw. 68 ab. Die Anschläge 66 und 68 sind in dem Gehäuse 18 angeordnet.

Insgesamt bildet die beschriebene Feststellvorrichtung 38 einen geschlossenen Regelkreis, da der Motor 24 gegen die Blockierkraft ein Drehmoment aufbringen muß und die sich aus dem Drehmoment ergebende Verdrehung aber wiederum ausgenützt wird, die Blockierung zu lösen. Die Blockierung wird also bei Anlauf des Motors 24 selbsttätig gelöst und solange gelöst bleiben, wie der Motor 24 läuft. Bei Stillstand des Motors wird die Blockierung aufgrund der Federkräfte wieder aktiviert.

Die Verschiebevorrichtung 22 ist in dem Gehäuse 18 aufgenommen und in Richtung auf den Deckel 20 mit einer Gehäusezwischenwand 70 gehalten.

Zwischen Gehäusezwischenwand 70 und Deckel 20 ist eine Leiterplatte 72 angeordnet.

Bevorzugt weist die Verschiebevorrichtung einen nicht näher dargestellten Multiturndrehgeber auf, der beispielsweise die Winkelstellung und Umdrehungen des zweiten Schneckenrades 36.2 messen kann. Die dazu notwendigen Komponenten, wie optische und/oder magnetische Abtastvorichtungen und evtl. Untersetzungsgetriebe, wie sie von Multiturndrehgebern bekannt sind und in der Zeichnung nicht näher dargestellt sind, können auf der Leiterplatte 72 und an der Gehäusezwischenwand 70 angeordnet sein.

Weiter sind an dem Schlitten 16 Anschlußmöglichkeiten 74 für eine elektrische Versorgung und Aus- und Einkopplung von Signalen, insbesondere eine Schnittstelle, vorgesehen.

In einer alternativen Ausführungsform der Erfindung könnte die Feststellvorrichtung an beiden Seiten, also an beiden Schneckenrädern 36.1 und 36.2 vorgesehen sein.

In einer weiteren Ausführungsform kann die Verstelleinrichtung manuell betätigbare Bedienelemente aufweisen, über die beispielsweise der Motor betätigt werden kann. Auch wäre ein Anschluss für ein Werkzeug, beispielsweise einen Innensechskantschlüssel denkbar, mit dem das Antriebsritzel 34 manuell betätigbar ist, so dass der Schlitten 16 notfalls auch ohne elektrische Versorgung der Verstelleinrichtung verstellbar ist.

## Patentansprüche

1. Verstelleinrichtung mit einem Schlitten (16), wenigstens einem Führungselement (12; 14) auf dem der Schlitten (16) verschiebbar gelagert ist, einer Verschiebevorrichung (22) zum Verschieben des Schlittens (16), einer Feststellvorrichtung (38) zum Feststellen des in eine gewünschte Position verschobenen Schlittens (16), wobei die Verschiebevorrichtung (22) einen elektrischen Motor (24) aufweist, der in dem Schlitten (16) integriert ist und dass die Feststellvorrichtung (38) Feststellmittel aufweist, die bei Stillstand des Motors (24) ein Verschieben des Schlittens (16) blockieren und sich bei Anlauf des Motors (24) selbsttätig lösen und die Feststellmittel ein Schneckenrad (36.1) eines antreibenden Getriebes umfassen und das Schneckenrad (36.1) zum Verschieben des Schlittens (16) in eine in dem Führungselement (12) vorgesehene Zahnreihe (28) eingreift, **dadurch gekennzeichnet, dass** das Feststellmittel weiter ein Spannelement (40) aufweist, mit dem das Schneckenrad (36.1) gegen die Zahnreihe (28) verspannt lagerbar ist und dass ein Lösemittel (42) vorgesehen ist, mit dem die auf dem Schneckenrad (36.1) liegende Spannkraft bei Betrieb des Motors (24) selbsttätig gegen die Spannkraft des Spannelements (40) lösbar ist.

2. Verstelleinrichtung nach Anspruch 1, **dadurch gekennzeichnet, dass** das Spannmittel (40) eine Blattfeder (40) ist, die auf eine Schneckenradwelle (36.1) einwirkt.

3. Verstelleinrichtung nach einem der vorhergehenden Ansprüche, **dadurch gekennzeichnet, dass** das Lösemittel (42) ein mit dem Motor (24) verdrehfest verbundener Führungshebel (42) ist, der abhängig von der Winkelstellung des Motorgehäuses (25) die Position des Schneckenrades (36.1) führt.

4. Verstelleinrichtung nach Anspruch 3, **dadurch gekennzeichnet, dass** der Führungshebel (42) symmetrisch ausgebildet ist.

5. Verstelleinrichtung nach einem der vorhergehenden Ansprüche, **dadurch gekennzeichnet, dass** die Verschiebevorrichtung mit dem Motor einen Drehgeber, vorzugsweise einen Multiturn-Drehgeber, aufweist.

6. Verstelleinrichtung nach einem der vorhergehenden Ansprüche, **dadurch gekennzeichnet, dass** mit dem Drehgeber die Winkelstellung und/oder Umdrehungen wenigstens eines angetriebenen Getriebeelements, vorzugsweise des Schneckenrades, ermittelbar sind.

7. Verstelleinrichtung nach einem der vorhergehenden Ansprüche, **dadurch gekennzeichnet, dass** als Führungselemente (12, 14) zwei Führungsstangen (12 und 14) vorgesehen sind und der Motor (24) mittig in dem Schlitten (16) angeordnet ist und das Getriebe (26) zwei Schneckenräder (36.1 und 36.2) treibt, die zum Verschieben jeweils in eine Zahnreihe (28 bzw. 30) der Führungsstangen (12, 14) eingreifen.

8. Verstelleinrichtung nach Anspruch 7, **dadurch gekennzeichnet, dass** an beiden Schneckenrädern Feststell- und Lösemittel vorgesehen sind.

9. Verstelleinrichtung nach einem der vorhergehenden Ansprüche, **gekennzeichnet durch** eine Schnittstelle (74) zum Anschluss einer Steuerung für die Verschiebevorrichtung (22).

10. Verstelleinrichtung nach einem der vorhergehenden Ansprüche, **gekennzeichnet durch** manuell betätigbare Bedienelemente zum Schalten des Motors.

11. Verstelleinrichtung nach einem der vorhergehenden Ansprüche, **gekennzeichnet durch** einen Anschluss für ein Werkzeug, wie z.B. Innensechskantschlüssel, zum manuellen Betätigen der Verschiebevorrichtung.

## Claims

1. Adjusting device comprising a carriage (16), at least one guide element (12; 14), on which the carriage (16) is movably mounted, a shifting device (22) for moving the carriage (16), a securing mechanism (38) for securing the carriage (16) in a desired position, whereas the shifting device (22) includes an electric motor (24) which is integrated into the carriage (16) and the securing mechanism (38) having a securing means adapted to block movements of the carriage (16) when the motor (24) is standing still and to automatically release the carriage and permit it to move when the motor (24) is activated and the securing means comprises a worm gear (36.1) of a drive transmission and the guide element (12) includes a row of teeth (28) and wherein the worm gear (36.1) engages for the carriage (16) movement, **characterized in that** the securing means includes a clamping element (40) which clamps the worm gear (36.1) against the row of teeth (28) and including a release device (42) with which the clamping force applied against the worm gear (36.1) is automatically released in opposition to the clamping force of the clamping element (40) while the motor (24) is activated.

2. Adjusting device according to claim 1 **characterized in that** the clamping element (40) is a leaf spring (40) which acts on a shaft of the worm gear (36.1).

3. Adjusting device according to one of the preceding claims, **characterized in that** the release device (42) comprises a guide lever (42) that is rotationally fixed relative to the motor and which guides the position of the worm gear (36.1) in dependence on the angular position of the motor housing (25).

4. Adjusting device according to claim 3 **characterized in that** the guide lever (42) has a symmetrical configuration.

5. Adjusting device according to one of the preceding claims, **characterized in that** the shifting device with the motor includes a rotary encoder, particularly a multi-turn rotary encoder.

6. Adjusting device according to one of the preceding claims, **characterized in that** the rotary encoder is adapted to determine the angular position and/or revolutions of at least one driven transmission element, particularly of the worm gear.

7. Adjusting device according to one of the preceding claims, **characterized in that** the guide element (12, 14) includes two guide rods (12 and 14), wherein the motor (24) is arranged centrally in the carriage (16), and including a transmission driving (26) two worm gears (36.1 and 36.2) with each one engaging one row of teeth (28, 30 respectively) of the guide rods (12, 14) for causing movements of the carriage.

8. Adjusting device according to claim 7, **characterized in that** both worm gears include a securing mechanism and a release device.

9. Adjusting device according to one of the preceding claims, **characterized by** an interface (74) for connection to a control system for the shifting device (22).

10. Adjusting device according to one of the preceding claims, **characterized by** manually activated operating elements for switching the motor on and off.

11. Adjusting device according to one of the preceding claims, **characterized by** a connection for a tool e. g. an allen key, enabling manual activation of the shifting device.

## Revendications

1. Dispositif de réglage comportant un chariot (16), au moins un élément de guidage (12 ; 14) sur lequel le chariot (16) est monté de façon à pouvoir se déplacer, un dispositif de déplacement (22) pour le déplacement du chariot (16), un dispositif de blocage (38) pour bloquer le chariot (16) déplacé dans une position souhaitée, le dispositif de déplacement (22) comportant un moteur électrique (24) qui est intégré dans le chariot (16), et le dispositif de blocage (38) comportant des moyens de blocage, qui bloquent un déplacement du chariot (16) lors de l'arrêt du moteur (24) et qui se dissocient automatiquement lors du démarrage du moteur (24), les moyens de blocage comprenant une roue à denture hélicoïdale (36.1) d'une transmission d'entraînement, et la roue à denture hélicoïdale (36.1) s'engageant pour le déplacement du chariot (16) dans une rangée de dents (28) prévue dans l'élément de guidage (12), **caractérisé en ce que** le moyen de blocage comporte en outre un élément de serrage (40), avec lequel la roue à denture hélicoïdale (36.1) peut être montée en étant serrée contre la rangée de dents (28), et **en ce qu'**il est prévu un moyen de dissociation (42), avec lequel la force de serrage exercée sur la roue à denture hélicoïdale (36.1) peut être dissociée automatiquement en s'opposant à la force de serrage de l'élément de serrage (40) lors du fonctionnement du moteur (24).

2. Dispositif de réglage selon la revendication 1, **caractérisé en ce que** le moyen de serrage (40) est un ressort à lame (40) qui agit sur un arbre de roue à denture hélicoïdale (36.1).

3. Dispositif de réglage selon l'une des revendications précédentes, **caractérisé en ce que** le moyen de dissociation (42) est un levier de guidage (42) relié solidairement en rotation au moteur (24), qui guide la position de la roue à denture hélicoïdale (36.1) en fonction de la position angulaire du carter (25) de moteur.

4. Dispositif de réglage selon la revendication 3, **caractérisé en ce que** le levier de guidage (42) est agencé de façon symétrique.

5. Dispositif de réglage selon l'une des revendications, précédentes, **caractérisé en ce que** le dispositif de déplacement avec le moteur comporte un indicateur de rotations, de préférence un indicateur de rotations multitours.

6. Dispositif de réglage selon l'une des revendications précédentes, **caractérisé en ce que** la position angulaire et/ou des rotations d'au moins un élément de transmission entraîné, de préférence de la roue à denture hélicoïdale, peuvent être déterminées avec l'indicateur de rotations.

7. Dispositif de réglage selon l'une des revendications précédentes, **caractérisé en ce que** deux barres de guidage (12 et 14) sont prévues en tant qu'éléments de guidage (12, 14), **en ce que** le moteur (24) est disposé au milieu du chariot (16), et **en ce que** la transmission (26) entraîne deux roues à denture hélicoïdale (36.1 et 36.2) qui, pour le déplacement, s'engagent respectivement dans une rangée de dents (28 ou 30) des barres de guidage (12, 14).

8. Dispositif de réglage selon la revendication 7, **caractérisé en ce que** des moyens de blocage et de dissociation sont prévus sur les deux roues à denture hélicoïdale.

9. Dispositif de réglage selon l'une des revendications précédentes, **caractérisé par** une interface (74) pour le raccordement d'une commande pour le dispositif de déplacement (22).

10. Dispositif de réglage selon l'une des revendications précédentes, **caractérisé par** des éléments de commande pouvant être actionnés manuellement pour la commutation du moteur.

11. Dispositif de réglage selon l'une des revendications précédentes, **caractérisé par** un raccordement pour un outil, tel que par exemple une clé à six pans creux, pour l'actionnement manuel du dispositif de déplacement.
